# EUROPEAN PATENT SPECIFICATION

(11) **EP 3 636 391 B1**
(45) Date of publication and mention of the grant of the patent: **28.12.2022**
(21) Application number: 18199913.7
(22) Date of filing: 11.10.2018
(51) Int. Cl.: B25J 9/10, B25J 9/12, B25J 11/00, B25J 17/02

(54) **JOINT AND HOUSEHOLD ASSISTANT**
GELENK UND HAUSHALTSASSISTENT
ARTICULATION ET ASSISTANT MÉNAGER

(43) Date of publication of application: 15.04.2020
(73) Proprietor: BSH Hausgeräte GmbH, 81739 München (DE)
(72) Inventor: Konanoor, Naveen, 560 095 Koramangala, Bangalore (IN); Kumar, Vijay, 560 103 Bangalore (IN); Kumar Kumar, Harish, 560 095 Koramangala, Bangalore (IN); Kumaran, Mohankumar, 560 095 Koramangala, Bangalore (IN); Shivaramaiah, Praveen Prathima, 560 095 Koramangala, Bangalore (IN); Mayr, Matthias, 85570 Markt Schwaben (DE); Sagoo, Kiran Pal, 82256 Fürstenfeldbruck (DE)

(56) References cited:
- EP-A1- 0 164 112
- JP-A- 2005 279 856
- US-A- 4 729 253
- US-A- 4 878 393

## Description

The invention relates to a household assistant with a joint, comprising a rotary body comprising at least one pivot bearing and being rotatable around a rotational axis, and a nodding body rotatably connected to the rotational body via a rotatable connection rotatable about a transverse axis, the transverse axis being perpendicular to the rotational axis. The household assistant comprises a base part and a movable head wherein the head is connected to the base part via the joint. The invention is particularly advantageously applicable to household appliances, especially kitchen appliances.

The German patent application with the official filing number 10 2016 216 409.0 discloses a household assistant for controlling an interaction between a user and a device. A head of the household assistant can be rotated relative to the base part by a vertical axis and pivoted around a horizontal axis to mimic a movement of a human head. This German patent application may be incorporated into the present application in its entirety and may form part of the disclosure of the present application.

To carry out a rotary motion and a pivot or nodding movement (also called a pivot or pitch movement), a ball joint may be used. The ball joint has the disadvantage that there is an additional, undesired degree of freedom (DoF) of movement and thus complicates movement control.

Also, a cross joint may be used to carry out a rotary motion and a nodding movement. The cross joint has the disadvantage that the rotary movement must be supported separately, and the nodding movement is then added on it. In addition, the cross joint has the disadvantage that yet another degree of freedom is introduced which causes the head to nod to the sides.

To provide a rotary motion and a nodding movement with only two degrees of freedom, it is also possible to serially connect a rotary body rotatable around a rotational axis to a pivotable nodding body. This disadvantageously results in a spacious design.

US 4 729 253 A describes a mechanical wrist actuator. JP 2005 279856 discloses a humanoid robot whose head can rotate and nod with regard to the chest.

It is the **object** of the present invention to at least partially overcome the disadvantages of the prior art and, in particular, to provide an especially compact design that enables a rotational motion and a nodding motion with a total of only two degrees of freedom of its movement and is simple to implement.

This object is achieved by the independent claim. Advantageous embodiments are subject of the dependent claims.

The object is achieved by a household assistant with a joint, comprising
- a first body (hereafter, without restriction, also called a "rotary body") with two pivot bearings being rotatable around a common rotational axis and
- a second body (hereafter, without restriction, also called as "nodding body") rotatably connected to the rotary body and being rotatable around a transverse axis, the transverse axis being perpendicular or perpendicularly aligned to the rotational axis,
   wherein
- the transverse axis is arranged in a middle between the two parallelly spaced pivot bearings with respect to the rotational axis.

This gives the advantage that an especially small height of the joint is achievable. In addition, this joint has only two mechanical degrees of freedom, namely a degree of freedom to rotate the rotary body and a degree of freedom to pivot the nodding body, so that a movement control of this joint is particularly easy to implement. In addition, this joint is mechanically easy to produce and robust.

The two pivot bearings each comprise at least one ring-shaped plain or rolling-element bearing.

The rotary body has two pivot bearings being spaced parallel to each other (along the axis of rotation), wherein the transverse axis is arranged with respect to the axis of rotation between the pivot bearings, in a middle between the pivot bearings. This results in a particularly stable design due to the use of the multiple pivot bearing. Also, comparatively flat pivot bearings may be used without compromising a robust construction of the joint.

It is an embodiment that the rotary body comprises a recess in which the rotatable connection is arranged. This enables a particularly robust construction of the rotary body in a flat design.

It is an embodiment that the rotary body comprises at least a first part and a second part and both parts or components comprise respective portions or sub-regions of seats or receptacles for the rotatable connection. This facilitates a rotatable connection of the nodding body and the rotary body and also provides a particularly reliable rotatable connection. For assembling the joint, the nodding body can be inserted into the sub-regions of the seats of the first or the second part of the rotary body, and then the other (second or first) part of the rotary body is put on the first or second part, thus holding the nodding body in the seats. In other words, this embodiment enables that the nodding body is inserted into the sub-regions of the seats of one of the parts of the rotary body in its not yet assembled state, and that it is rotatably held in the seats after assembly. The two parts of the rotary body may be screwed, welded, glued, etc. together.

In general, the rotary body may comprise further parts, but in particular no further part comprises sub-regions of the seats.

It is an embodiment that the sub-regions of the seats are formed in a semi-cylindrical shape, and two sub-regions form a cylindrical seat if the rotary body is in its assembled state. This advantageously allows a particularly simple design of the rotatable connection. However, generally, the rotary body may also have integral (i.e., non-dividable) seats.

It is an embodiment that the nodding body has two pins arranged along the transverse axis which are rotatably inserted into respective seats of the rotary body. This embodiment is implementable in a structurally particularly simple and compact manner. If two pivot bearings are used, the pins are advantageously located between the pivot bearings.

It is an embodiment that the pins and the respective seats form plain bearings. In this case, the pins directly contact respective walls of the seats. This provides the advantage that the rotatable connection can be implemented particularly simple and inexpensive.

It is an embodiment that the pins are connected with the seats via a respective pivot bearing element. The pivot bearing element is a separately manufactured component which enables a rotary connection between the rotary body or its seat and the nodding body or its pin. In particular, the pivot bearing element may be a ring-shaped rolling bearing mounted on the respective pin. The rolling bearing may, for example, be a needle roller bearing. The use of rolling bearings has the advantage that a particularly wear-free and friction-free rotation of the nodding body relative to the rotary body can be achieved.

It is an embodiment that the joint comprises an axle body (hereinafter, without loss of generality, also referred to as "axle") which extends or passes through the nodding body and which is inserted in the seats of the rotary body. This allows a particularly simple embodiment of the joint. In addition, a particularly robust and reliable rotatable connection between the nodding body and the rotary body can be obtained since the axle may be varied in terms of its length and / or its choice of material in a simple and inexpensive way. The axle thus produces a mechanical rotary connection between the rotary body or its seats and the nodding body. In particular, the axle body is a separate component which, during assembly of the joint, is inserted through the nodding body and is rotatably mounted in the seats. That the axle extends through the nodding body may include that the nodding body has a through hole whose axis corresponds to the transverse axis. The axle may be firmly or loosely connected to the nodding body. The axle may also be firmly or loosely connected to walls of the seats of the rotary body.

In one variant, the rotary body is a separable body in which the axle may be inserted in analogy to the pins as described above. In another variant, the seats of the rotary body for the axle are implemented as through holes, and the axle may be pushed into the through holes of the rotary body and the nodding body.

It is an embodiment that the axle body and the seats form a sliding bearing, the axle body thus directly contacting the wall of the seats. This provides the advantage that the rotatable connection may be implemented in a particularly simple and inexpensive manner.

It is an embodiment that the axle body is designed as a rolling bearing, in particular a needle roller bearing. The use of rolling bearings has the advantage that a particularly wear-free and friction-free rotation of the nodding body relative to the rotary body can be achieved.

It is an embodiment that at least one cable conduit in form of a channel leads or extends through the nodding body and opens into the recess and that at least one cable conduit in form of a channel runs through the rotary body and opens into the recess. As a result, cables between a component connected to the rotary body and a component connected to the nodding body can be guided through the joint in a particularly compact and well-protected manner. Further, a cable layout may be implemented in a particularly compact design, and stress on the cable by deformation in a space between the rotary body and the nodding body can be kept particularly low. It is an embodiment that the cable conduit runs along a longitudinal axis of the nodding body.

It is an embodiment that the nodding body is restricted to a nodding or rotation range of +/- 90° about the transverse axis, in particular to +/- 45°, in particular to +/- 25°. This allows a particularly simple and robust design of the joint. The nodding or rotation may be restricted by the rotary body or by any other means, e.g., a housing, a drive motor etc.

It is an embodiment that the recess is a slot-shaped recess, the nodding body is rotatable in the slot-shaped recess and a wall of the slot-shaped recess forms at least one stop for the nodding body. Thus, an angle-limited pivoting (pitch / nodding) movement of the nodding body relative to the rotary body is particularly easy to implement.

It is an embodiment that the rotary body and the nodding body comprise respective drive-engagement surfaces for connection to a respective drive or motor. A drive-engagement surface may in particular be understood as meaning a surface that allows or is intended to be engaged by a driving means for rotating the respective body.

It is an embodiment that the drive-engagement surfaces are pinion-like surfaces and are formed in the manner of a pinion, respectively. This allows a particularly robust and reliable connection to a motor or drive element.

The household assistant comprises a base part and a movable head, the head being connected to the base part via the joint as described above. Thus, the advantage is achieved that the household assistant has a particularly compact design and its head can perform rotational movements and pitching movements similar to a human head. It is an embodiment that the head is fixedly connected to the nodding body and the rotary body is fixedly connected to the base part. Such a household assistant may be a household robot. The household assistant may correspond to the device disclosed in the German patent application with the official filing number 10 2016 216 409.0. The household assistant may, in particular, be a household assistant or household robot from BSH Hausgeräte GmbH known by the name "Mykie".

The above-described features and advantages of this invention as well as their implementation will now be schematically described in more detail by at least one embodiment in the context of one or more figures.
- FIG.1: shows a sectional side view of a sketch of a joint according to a first embodiment;
- FIG.2: shows a sectional side view of the joint according to the first embodiment in a sectional plane rotated by 90° relative to the sectional plane shown in FIG.1;
- FIG.3: shows a sectional side view of a sketch of a joint according to a second embodiment;
- FIG.4: shows a sectional side view of the joint according to the second embodiment in a sectional plane rotated by 90° with respect to the sectional plane shown in FIG.3; and
- FIG.5: shows an oblique view of a joint, e.g. according to the first or the second embodiment.

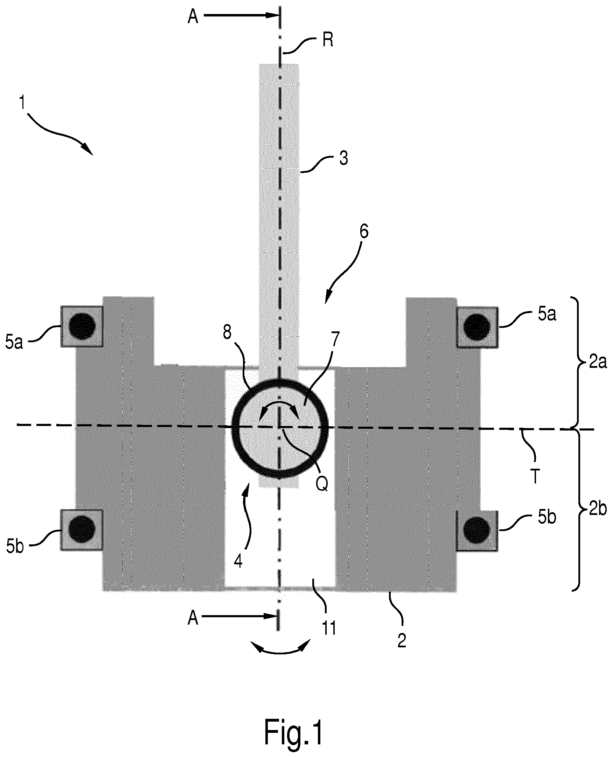

**FIG.1** shows a sectional side view of a joint 1. The joint 1 has a rotary body 2 rotatable about a rotational axis R and a nodding body 3 which is connected to the rotary body 2 via a rotatable connection 4. Particularly, the axis of rotation of the the rotatable connection 4 is a "transverse" axis Q aligned perpendicular to the rotational axis R. The rotational axis R lays within the section plane.

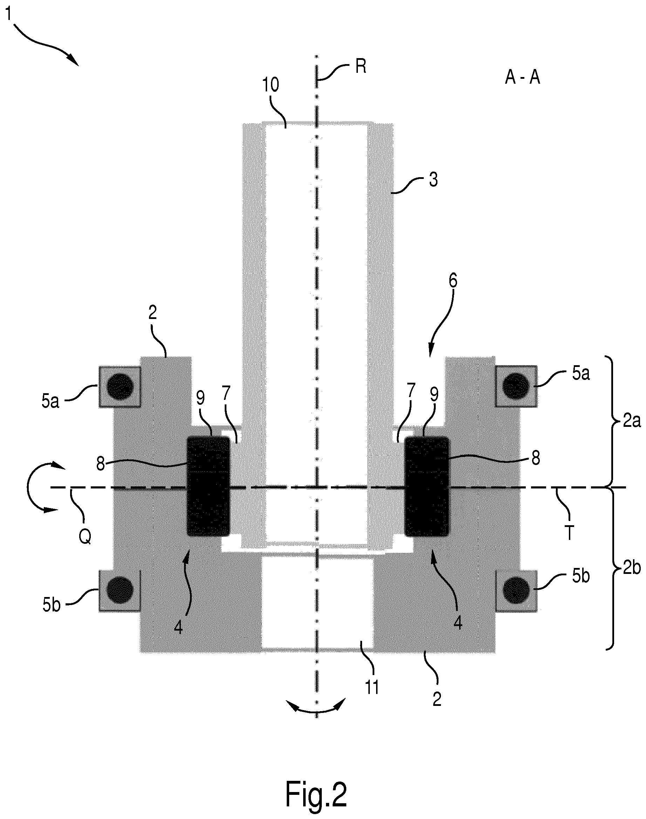

**FIG.2** shows a sectional side view of joint 1 onto a sectional plane A-A as indicated in FIG.1.

The rotary body 2 comprises two parallelly aligned pivot bearings 5a and 5b positioned along the rotational axis R in a spaced manner. Particularly, the rotatable connection 4 is positioned between the two pivot bearings 5a, 5b, here: in the middle between the two pivot bearings 5a, 5b. Thus, the transverse axis Q runs between the two pivot bearings 5a, 5b. This achieves a particularly flat and stable design.

The rotary body 2 also has a recess 6, in which the rotatable connection 4 is arranged or positioned. The rotatable connection 4 comprises two pins 7 which are in alignment with one another and which extend from opposite sides of the nodding body 3. Onto each of the pins 7 is plugged a pivot or rotary bearing in the form of a roller bearing, in particular a needle roller bearing 8. The needle roller bearings 8 are inserted in respective seats 9 of the recess 6. A slip-free connection of the needle roller bearing 8 with the pin 7 and the seats 9 may be achieved by a force fit and/or a positive fit.

The rotary body 2 is composed of two parts, namely a first part 2a and a second part 2b. A planar separation or dividing plane T divides the two parts 2a, 2b in such a manner that they each comprise respective sub-regions of the seats 9. In particular, dividing plane T separates seats 9 into symmetrical, in particular mirror-symmetrical, sub-regions. For example, if the seats 9 have a cylindrical basic shape, the sub-regions correspond to cylinder halves divided along their longitudinal axis. However, generally, the dividing plane T does not need to be planar.

The joint 1 may be produced such that a first one of the two parts 2a or 2b is provided, the pins 7 (which are equipped with the needle roller bearings 8) are inserted into the sub-regions of the seats 9 of this part 2a or 2b, and then the other of the two parts 2b or 2a is fitted properly on the first provided part 2a or 2b. The two parts 2a and 2b may then be firmly connected to each other, for example via screwing, by welding, etc.

A cable channel 10 extends through the nodding body 3, while a cable channel 11 extends through the rotary body 2. Both cable channels 10 and 11 open into the recess 6. In particular, an opening of the cable channel 10 and an opening of the cable channel 11 may be positioned opposite to each other when a longitudinal axis of the nodding body 3 is aligned in parallel to the rotational axis R. In this position, a cable (not shown) running through one of the cable channels 10 and 11 passes into the other cable channel 11 or 10 without being bent.

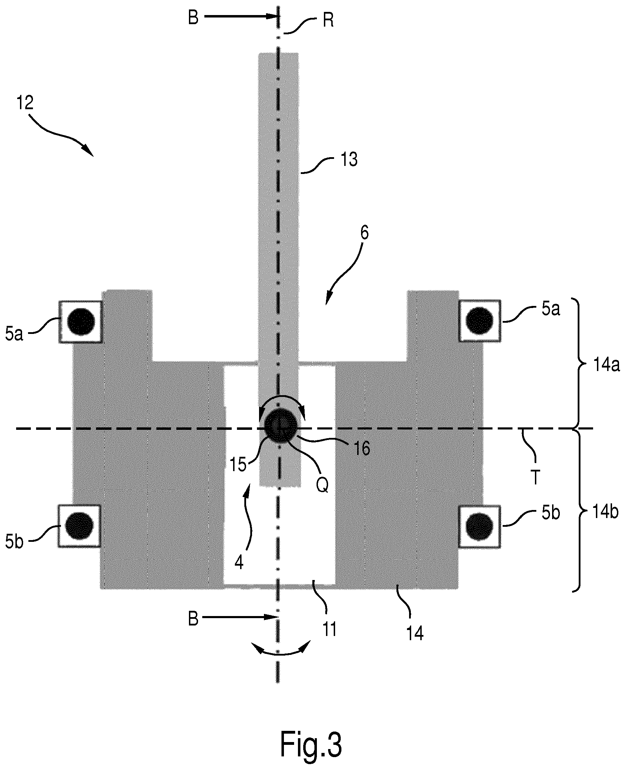

**FIG.3** shows a sectional side view of a sketch of a joint 12. The joint 12 is constructed in a manner similar to joint 1, but now the nodding body 13 has no lateral pins 7 but is rotatably connected to the rotary body 14 by means of an axle 15 as the rotatable connection.

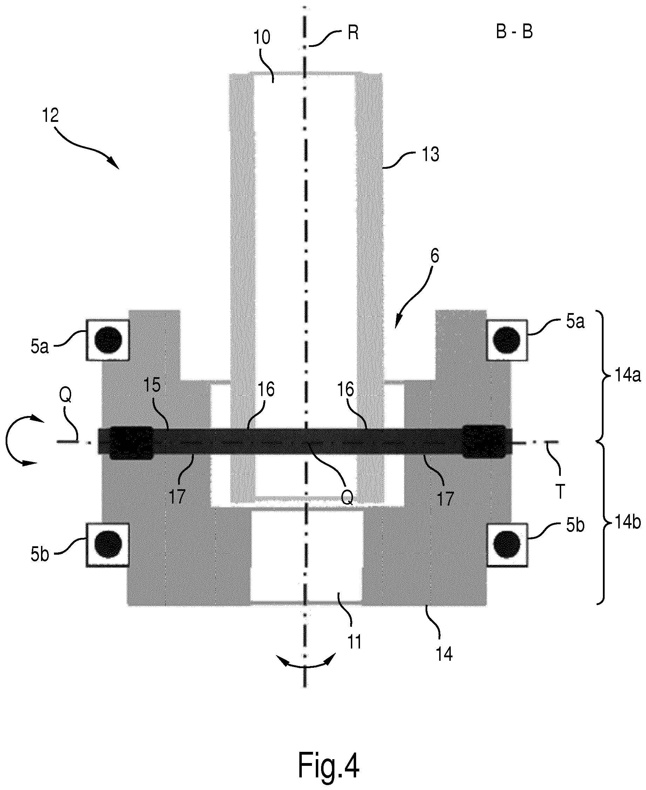

**FIG.4** shows the joint 12 in a sectional plane rotated by 90° about the rotational axis R relative to FIG.3.

The axis 15 may be formed as a simple rod or may, as shown, be embodied as a rolling bearing, in particular needle roller bearing. The axis 15 extends through a through hole 16 of the nodding body 3 and through corresponding seats 17 in the rotary body 14. The axis 15 may be held in the through hole 16 by force fit and/or by positive fit or may freely rotate in the through hole 16. The axis 15 may also be held in the seats 17 by force fit and/or by positive fit or may freely rotate therein.

The rotary body 14, too, may be constructed in two parts comprising a first part 14a and a second part 14b, wherein the dividing plane T separates the seats 17 in a mirror-symmetrical manner. The transverse axis Q lies in the dividing plane T.

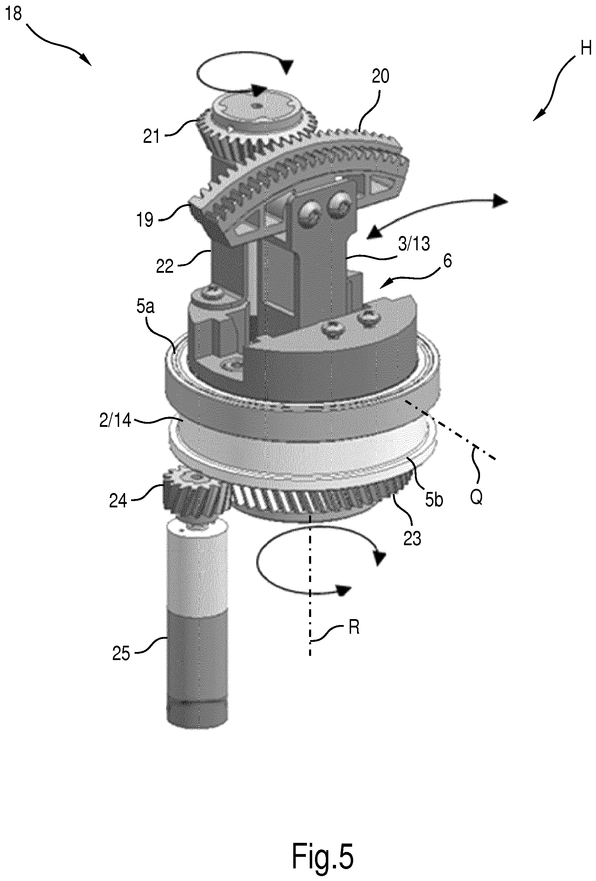

**FIG.5** shows an oblique view of a joint 18 which may be constructed in analogy to the joints 1 or 12.

The rotary body 2 or 14 shows the recess 6 as a slot-shaped recess. A wall of the recess 6 provides stops for a rotational movement of the nodding body 3 or 13 at +/- 90° with respect to a central position of the nodding body 3 or 13 at which the longitudinal axis of the nodding body 3 or 13 extents parallel to the rotational axis R. The pivot or rotation of the nodding body 3 or 13 is thus limited by the rotary body 2 or 14 to a rotational range of approximately 90° relative to the axis of rotation R.

At an end portion of the nodding body 3 or 13 facing away from the rotary body 2 or 14, a pinion piece 19 is attached to the nodding body 3 or 13, for example screwed. The pinion piece 19 comprises a circle sector-like row 20 of teeth arranged as a drive-engaging surface. The pinion piece 19 is either completely or only partially shown. In particular, the pinion piece 19 may extend around the nodding body 3 or 13 by +/- 90°. A drive pinion 21 of a drive motor 22 engages the row 20 of teeth of the pinion piece 19. By rotation of the drive pinion 21, a rotational position or angular position of the nodding body 3 or 13 with respect to the transverse axis Q can be precisely adjusted. The drive motor 22, in particular an electric motor, is fixedly connected to the rotary body 2 or 14 and thus rotates with the rotary body 2 or 14, respectively.

On the rotary body 2 or 14, a circular encircling sprocket or pinion 23 is attached as a drive-engaging surface. A drive pinion 24 of a drive motor 25 engages the pinion 23. By a rotation of the drive pinion 24, a rotational position or angular position of the rotary body 2 or 14 may be set precisely with respect to the rotation axis R.

The joint 18 may be part of a household assistant H, wherein the nodding body 3 or 13 may be connected to a head (not shown) of the household assistant H and the rotary body 2 or 14 may be connected with a base part (not shown) of household Assistant H, or vice versa.

### Reference character list

- 1: Joint
- 2: Rotary body
- 2a/2b: First / second part of the rotary body
- 3: Nodding body
- 4: Rotatable connection
- 5a: Pivot bearing
- 5b: Pivot bearing
- 6: Recess
- 7: Pin
- 8: Needle roller bearing
- 9: Seat
- 10: Cable channel
- 11: Cable channel
- 12: Joint
- 13: Nodding body
- 14: Rotary body
- 14a/14b: First / second part of the rotary body
- 15: Axis
- 16: Through hole
- 17: Seat
- 18: Joint
- 19: Pinion piece
- 20: Row of teeth
- 21: Drive Pinion
- 22: Drive motor
- 23: Pinion
- 24: Drive Pinion
- 25: Drive motor
- H: Household assistant
- Q: Transverse axis
- R: Rotation axis
- T: Dividing plane

## Claims

1. A household assistant (H), comprising a base part and a movable head, wherein the head is connected to the base part via a joint (1; 12; 18), the joint (1; 12; 18) comprising
- a rotary body (2; 14) comprising two pivot bearings (5a, 5b), each being rotatable around a common rotational axis (R); wherein the two pivot bearings (5a, 5b) are parallelly spaced along the rotational axis (R); wherein the two pivot bearings (5a, 5b) each comprise a ring-shaped plain or rolling-element bearing; and
- a nodding body (3; 13) rotatably connected to the rotary body (2; 14) via a rotatable connection (4; 15) rotatable about a transverse axis (Q), the transverse axis (Q) being perpendicular to the rotational axis (R);
wherein
- the transverse axis (Q) is arranged in a middle between the two parallelly spaced pivot bearings (5a, 5b) with respect to the rotational axis (R).

2. The household assistant (H) according to claim 1, wherein the rotary body (2; 14) comprises a recess (6) in which the rotatable connection (4; 15) is arranged.

3. The household assistant (H) according to any of the preceding claims, wherein the rotary body (2; 14) comprises at least a first part (2a; 14b) and a second part (2b; 14b) and both parts (2a, 2b; 14a, 14b) have respective sub-regions of seats (9, 17) provided for receiving the rotatable connection (4, 15).

4. The household assistant (H) according to claim 3, wherein the nodding body (3; 13) comprises two pins (7) aligned along the transverse axis (Q) and rotatably inserted into the respective seats (9) of the rotary body (2).

5. The household assistant (H) according to claim 3, wherein the joint (12; 18) comprises an axle (15) passing through the nodding body (13) and being inserted in the seats (17) of the rotary body (14),

6. The household assistant (H) according to claim 2, wherein
- at least one cable channel (10) extends through the nodding body (3; 13) along a longitudinal axis of the nodding body (3; 13),
- at least one cable channel (11) extends through the rotary body (2; 14) and
- the cable channels (10, 11) open into the recess (6).

7. The household assistant (H) according to any of the preceding claims, wherein a rotation of the nodding body (3; 13) about the transverse axis (Q) is restricted by the rotary body (2; 14) to a rotation range of 90°.

8. The household assistant (H) according to claim 6, wherein the recess (6) is a slot-shaped recess (6), the nodding body (3; 13) is rotatable in the slot-shaped recess (6) and a wall of the slot-shaped recess (6) forms at least one stop for the nodding body (3, 13).

9. The household assistant (H) according to any of the preceding claims, wherein the rotary body (2; 14) and the nodding body (3; 13) have respective drive-engagement surfaces (20; 23) for engagement with a respective motor (22, 25).

10. The household assistant (H) according to claim 9, wherein the drive-engagement surfaces (20; 23) are formed as pinion-like surfaces.

11. The household assistant (H) according to any of the preceding claims, wherein the joint (1; 12; 18) has only two mechanical degrees of freedom, a first degree of freedom to rotate the rotary body (2; 14) and a second degree of freedom to pivot the nodding body (3; 13).

## Patentansprüche

1. Haushaltshilfe (H), die einen Sockelteil und einen beweglichen Kopf umfasst, wobei der Kopf über ein Gelenk (1; 12; 18) mit dem Sockelteil verbunden ist, wobei das Gelenk (1; 12; 18) Folgendes umfasst:
- einen drehbaren Hauptteil (2; 14), der zwei Drehlager (5a, 5b) umfasst, von denen jedes um eine gemeinsame Drehachse (R) drehbar ist, wobei die beiden Drehlager (5a, 5b) an der Drehachse (R) entlang parallel beabstandet sind, wobei die beiden Drehlager (5a, 5b) jeweils ein ringförmiges Gleit- oder Wälzlager umfassen, und
- einen nickenden Hauptteil (3; 13), der über eine um eine Querachse (Q) drehbare Drehverbindung (4; 15) drehbar mit dem drehbaren Hauptteil (2; 14) verbunden ist, wobei die Querachse (Q) senkrecht zur Drehachse (R) verläuft,
wobei
- die Querachse (Q) in Bezug auf die Drehachse (R) in der Mitte zwischen den beiden parallel beabstandeten Drehlagern (5a, 5b) angeordnet ist.

2. Haushaltshilfe (H) nach Anspruch 1, wobei der drehbare Hauptteil (2; 14) eine Vertiefung (6) umfasst, in der die Drehverbindung (4; 15) angeordnet ist.

3. Haushaltshilfe (H) nach einem der vorhergehenden Ansprüche, wobei der drehbare Hauptteil (2; 14) zumindest einen ersten Teil (2a; 14b) und einen zweiten Teil (2b; 14b) umfasst und beide Teile (2a, 2b; 14a, 14b) jeweils Teilbereiche von Aufnahmen (9, 17) aufweisen, die zum Aufnehmen der Drehverbindung (4, 15) vorgesehen sind.

4. Haushaltshilfe (H) nach Anspruch 3, wobei der nickende Hauptteil (3; 13) zwei Stifte (7) umfasst, die an der Querachse (Q) entlang ausgerichtet und drehbar in die jeweiligen Aufnahmen (9) des drehbaren Hauptteils (2) eingeführt sind.

5. Haushaltshilfe (H) nach Anspruch 3, wobei das Gelenk (12; 18) eine Achse (15) umfasst, die durch den nickenden Hauptteil (13) hindurch verläuft und in die Aufnahmen (17) des drehbaren Hauptteils (14) eingeführt ist.

6. Haushaltshilfe (H) nach Anspruch 2, wobei
- an einer Längsachse des nickenden Hauptteils (3; 13) entlang mindestens ein Kabelkanal (10) durch den nickenden Hauptteil (3; 13) hindurch verläuft,
- mindestens ein Kabelkanal (11) durch den drehbaren Hauptteil (2; 14) hindurch verläuft und
- die Kabelkanäle (10, 11) in die Vertiefung (6) münden.

7. Haushaltshilfe (H) nach einem der vorhergehenden Ansprüche, wobei ein Drehen des nickenden Hauptteils (3; 13) um die Querachse (Q) durch den drehbaren Hauptteil (2; 14) auf einen Drehbereich von 90° eingeschränkt ist.

8. Haushaltshilfe (H) nach Anspruch 6, wobei es sich bei der Vertiefung (6) um eine schlitzförmige Vertiefung (6) handelt, der nickende Hauptteil (3; 13) in der schlitzförmigen Vertiefung (6) drehbar ist und eine Wand der schlitzförmigen Vertiefung (6) mindestens einen Anschlag für den nickenden Hauptteil (3, 13) bildet.

9. Haushaltshilfe (H) nach einem der vorhergehenden Ansprüche, wobei der drehbare Hauptteil (2; 14) und der nickende Hauptteil (3; 13) jeweils Antriebseingriffsflächen (20; 23) zum Ineingriffbringen mit einem jeweiligen Motor (22, 25) aufweisen.

10. Haushaltshilfe (H) nach Anspruch 9, wobei die Antriebseingriffsflächen (20; 23) als kegelradartige Flächen ausgebildet sind.

11. Haushaltshilfe (H) nach einem der vorhergehenden Ansprüche, wobei das Gelenk (1; 12; 18) nur zwei mechanische Freiheitsgrade aufweist, einen ersten Freiheitsgrad zum Drehen des drehbaren Hauptteils (2; 14) und einen zweiten Freiheitsgrad zum Schwenken des nickenden Hauptteils (3; 13).

## Revendications

1. Assistant ménager (H) comprenant une base et une tête mobile, la tête étant raccordée à la base via une articulation (1 ; 12 ; 18), l'articulation (1 ; 12 ; 18) comprenant
- un corps rotatif (2 ; 14) comprenant deux paliers pivotants (5a, 5b), chacun pouvant tourner autour d'un axe de rotation commun (R) ; les deux paliers pivotants (5a, 5b) étant espacés parallèlement le long de l'axe de rotation (R) ; où les deux paliers pivotants (5a, 5b) comprennent chacun un palier lisse annulaire ou un roulement ; et
- un corps basculant (3 ; 13) raccordé de façon rotative au corps rotatif (2 ; 14) via un raccord rotatif (4 ; 15) pouvant tourner autour d'un axe transversal (Q), l'axe transversal (Q) étant perpendiculaire à l'axe de rotation (R) ;
dans lequel
- l'axe transversal (Q) est disposé au milieu entre les deux paliers pivotants (5a, 5b) espacés parallèlement par rapport à l'axe de rotation (R).

2. Assistant ménager (H) selon la revendication 1, dans lequel le corps rotatif (2 ; 14) comprend un renfoncement (6) dans lequel est disposé le raccordement rotatif (4 ; 15).

3. Assistant ménager (H) selon l'une quelconque des revendications précédentes, dans lequel le corps rotatif (2 ; 14) comprend au moins une première partie (2a ; 14b) et une seconde partie (2b ; 14b) et les deux parties (2a, 2b ; 14a, 14b) ont des sous-régions respectives de sièges (9, 17) prévues pour recevoir le raccordement rotatif (4 ; 15).

4. Assistant ménager (H) selon la revendication 3, dans lequel le corps basculant (3 ; 13) comprend deux broches (7) alignées le long de l'axe transversal (Q) et insérées de façon rotative dans les sièges respectifs (9) du corps rotatif (2).

5. Assistant ménager (H) selon la revendication 3, dans lequel l'articulation (12 ; 18) comprend un axe (15) passant à travers le corps basculant (13) et étant inséré dans les sièges (17) du corps rotatif (14).

6. Assistant ménager (H) selon la revendication 2, dans lequel
- au moins un canal de câbles (10) s'étend à travers le corps basculant (3 ; 13) le long d'un axe longitudinal du corps basculant (3 ; 13),
- au moins un canal de câbles (11) s'étend à travers le corps rotatif (2 ; 14) et
- les canaux de câbles (10, 11) débouchent dans le renfoncement (6).

7. Assistant ménager (H) selon l'une quelconque des revendications précédentes, dans lequel une rotation du corps basculant (3 ; 13) autour de l'axe transversal (Q) est limitée par le corps rotatif (2 ; 14) à une gamme de rotation de 90°.

8. Assistant ménager (H) selon la revendication 6, dans lequel le renfoncement (6) est un renfoncement en forme de fente (6), le corps basculant (3 ; 13) pouvant tourner dans le renfoncement en forme de fente (6) et une paroi du renfoncement en forme de fente (6) formant au moins une butée pour le corps basculant (3 ; 13).

9. Assistant ménager (H) selon l'une quelconque des revendications précédentes, dans lequel le corps rotatif (2 ; 14) et le corps basculant (3 ; 13) ont des surfaces d'engagement d'entraînement respectives (20 ; 23) destinées à s'engager avec un moteur respectif (22, 25).

10. Assistant ménager (H) selon la revendication 9, dans lequel les surfaces d'engagement d'entraînement (20 ; 23) sont conformes à des surfaces en forme de pignon.

11. Assistant ménager (H) selon l'une quelconque des revendications précédentes, dans lequel l'articulation (1 ; 12 ; 18) n'a que deux degrés de liberté mécaniques, un premier degré de liberté pour faire tourner le corps rotatif (2 ; 14) et un second degré de liberté pour faire pivoter le corps basculant (3 ; 13).
